# EUROPÄISCHE PATENTANMELDUNG

(11) **EP 1 269 828 A1**
(43) Veröffentlichungstag der Anmeldung: **02.01.2003**
(21) Anmeldenummer: 02012851.8
(22) Anmeldetag: 11.06.2002
(51) Int. Cl.: A01F 15/10

(54) **Rotor**

(30) Priorität: 28.06.2001 DE 10131239
(71) Anmelder: DEERE & COMPANY, Moline, Illinois 61265-8098 (US)
(72) Erfinder: Viaud, Jean, 70100 Gray (FR); Lucand, Philippe, 70120 Melin (FR); Guiet, Lionel, 70100 Gray (FR); Chabassier, Aurelien, 70100 Broy (FR); Beaudoin, Alain, 70100 Ancier (FR)
(74) Vertreter: Magin, Ludwig Bernhard

(57) **Zusammenfassung**

Bekannte Rotoren in Trennvorrichtungen von Erntebergungsmaschinen weisen ein Rohr mit Öffnungen auf, in die Formschlußelemente von Mitnehmern eingesetzt werden können, die deren Befestigung in der Umfangsrichtung dienen. Die Fertigung der Öffnungen und Formschlußelemente hat sich als fertigungsintensiv herausgestellt.

Es wird ein Rotor (34) mit einem Rohr (40) vorgeschlagen, dessen Außenquerschnitt unrund ist und auf den zusammengebaute oder einstückige Mitnehmer (42) aufgeschoben werden können, die eine Ausnehmung (50) der gleichen Form und Größe aufweisen wie die Außenumfangsfläche des Rohrs (40) und somit eine drehfeste Verbindung zwischen ihnen erzeugen.

Derartige Rotoren (34) werden z. B. in Rundballenpressen eingesetzt.

## Beschreibung

Die Erfindung betrifft einen Rotor mit Mitnehmern als Teil einer Trennvorrichtung einer landwirtschaftlichen Maschine.

Schneidvorrichtungen im Aufnahmebereich von Erntebergungsmaschinen weisen Rotoren mit darauf befestigten Fingern auf, die Erntegut ergreifen und über feststehende Messer ziehen, von denen es zerkleinert wird. Da insbesondere beim Eintritt von Fremdkörpern auf die Finger oder sonstige Mitnehmer hohe Kräfte einwirken, werden im Stand der Technik vielfältige Lösungen vorgeschlagen, nach denen die Finger auf dem Rotor befestigt und bei Schäden ausgetauscht werden - sh. DE A 195 41 561, DE U 93 176 378, DE A 43 23 214, WO A 84/02252.

Das der Erfindung zugrunde liegende Problem wird darin gesehen, daß in jedem Fall in den Mantel eines rundzylindrischen Rohrs Öffnungen eingebracht werden, die Mitnehmer mit Nasen versehen und in die Öffnungen eingehängt und anschließend zusammengeschweißt oder zusammengeschraubt werden. All diese Fertigungsschritte sind kostspielig.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann auf die Öffnungen und die Nasen verzichtet werden; vielmehr erfolgt ein Formschluss aufgrund des unrunden, insbesondere kantigen Profils des Rohrs, wobei anstelle eines Rohrs auch ein Vollmaterialkörper verwendet werden könnte und ausdrücklich unter den Schutzbereich fallen soll. So kann das Rohr 3-, 4-, 5-, 6-, 7-, 8- oder höhereckig ausgebildet sein. Es könnte auch ein Rohr mit einem z. B. kreuzförmigen Profil oder dergleichen gewählt werden - wichtig ist lediglich, daß der Außenquerschnitt nicht rund ist. Die Mitnehmer können individuell ausgebildet und zu einem Ring zusammengefasst werden, oder bereits als ein Ring hergestellt werden, der dann axial auf das Rohr aufgeschoben wird. Dabei reicht es aus, wenn die Mitnehmer bzw. der Ring nur punktuell an der Umfangsfläche des Rohrs anliegt, soweit eine drehfeste Halterung erreicht wird. Während die Mitnehmer im einfachsten Fall Finger, Zähne oder dergleichen sind, können sie auch als feststehende Messer, z. B. eines Strohhäckslers dienen.

Hohe Kosteneinsparungen werden erzielt, wenn die Anzahl der Mitnehmer um das Rohr pro Reihe in einem einstückigen Ring zusammengefasst wird, z. B. aus einer Stahlscheibe herausgestanzt, -geschnitten oder -gebrannt wird. Insbesondere beim Stanzen wird eine hohe Festigkeit und eine kurze Herstellzeit erreicht. Beim Schneiden bzw. Brennen, insbesondere mittels Lasertechnologie, können sehr enge Toleranzen erzielt werden, die eine nahezu spielfreie Lagerung der Ringe auf dem Rohr erbringen.

Zwar können die Mitnehmer auch aus anbringbaren Zinken, Zähnen oder dergleichen gebildete Mitnehmerelemente aufweisen; eine einfache Herstellung ist jedoch dadurch möglich, daß der Ring bzw. die Teile eines zusammenzubauenden Rings als Vieleck ausgebildet werden, dessen Ecken bzw. Spitzen die jeweiligen Mitnehmerelemente bilden.

Wenn die Anlageflächen aufeinanderfolgender Mitnehmer gegenüber den Mitnehmerelementen unterschiedlich versetzt sind, verlaufen die Spitzen, also die Mitnehmerelemente der aufgesetzten Mitnehmer auf einer Schraubenlinienform, so daß eine schubweise Förderung mit Lastspitzen vermieden wird. Alle auf einem Rohr aufzunehmenden Mitnehmer werden als Satz zusammengefasst und gegebenenfalls markiert, so daß die aufgesetzten Mitnehmer z. B. schraubenlinienförmig verlaufen.

Eine alternative Ausführungsform zu versetzten Anlageflächen besteht darin, daß die Anlageflächen des Rohrs und der Mitnehmer in einem geradzahligen Verhältnis zueinander stehen.

Auf diese Weise kann eine hohe Anzahl gleicher Mitnehmer hergestellt, aber in unterschiedlichen Stellungen auf das Rohr ausgesetzt werden. Somit ist nicht nur eine Schraubenlinienform möglich, sondern alle möglichen anderen Verteilungen können gewählt werden.

Zwar können die Mitnehmer mit Schultern oder dergleichen versehen werden, um einen Abstand zu bilden, durch den dem Rotor gegenüberliegende Abstreifer gleiten können; eine einfachere Weise besteht jedoch darin, lose aber festlegbare Distanzstücke zwischen die Mitnehmer einzufügen, die in den Mitnehmern oder auf dem Rohr gehalten werden können. Z. B. könnten die aneinandergrenzenden Seiten der Mitnehmer Öffnungen enthalten, in die Bolzen mit Köpfen eingesetzt werden. Oder es könnten Schalen oder dergleichen auf das Rohr aufgeschweißt oder aufgeklebt werden.

Distanzstücke mit einer runden Außenform haben den Vorteil, daß das zu fördernde Gut ungehindert an ihnen vorbei bzw. auf ihnen entlang gleiten kann. Die Ausbildung als Ring ermöglicht es, sie zusammen mit den gegebenenfalls als Ring ausgebildeten Mitnehmern auf das Rohr aufzuschieben und aneinander anzulegen.

Eine weitere Möglichkeit der Verteilung der Mitnehmer auf der Länge oder in der Umfangsrichtung besteht darin, die Anzahl der Distanzstücke zu variieren.

Die Mitnehmer und gegebenenfalls die Distanzstücke können in einfacher Weise dadurch auf dem Rohr befestigt werden, daß wenigstens einem Endbereich des Rotors eine mittels Schrauben oder dergleichen anlegbare Halteplatte vorgesehen ist. Es wären auch zwei Halteplatten möglich, nämlich an jedem Endbereich, die mittels Spannschrauben zusammengehalten werden.

In hervorragender Weise können Fertigungskosten dadurch gespart werden, daß eine oder beide Endplatten zugleich als Wellenstummel ausgebildete Lagerzapfen für die Lagerung des Rotors in einem Rahmen oder dergleichen aufweisen.

Als Alternative zu Wellenstummeln könnte auch eine Welle gewählt werden, die sich durch das Rohr und die Halteplatten erstreckt und z. B. mittels Spannmuttern oder einer Spannmutter und einer Schulter den gesamten Zusammenbau festigt.

In der Zeichnung ist ein nachfolgend näher beschriebenes Ausführungsbeispiel der Erfindung dargestellt. Es zeigt:
- Fig. 1: eine landwirtschaftliche Maschine mit einer Trennvorrichtung in Seitenansicht und in schematischer Darstellung,
- Fig. 2: einen Teil eines Rotors in perspektivischer Darstellung,
- Fig. 3: einen komplettierten Rotor in perspektivischer Darstellung, und
- Fig. 4: einen komplettierten Rotor in Vorderansicht.

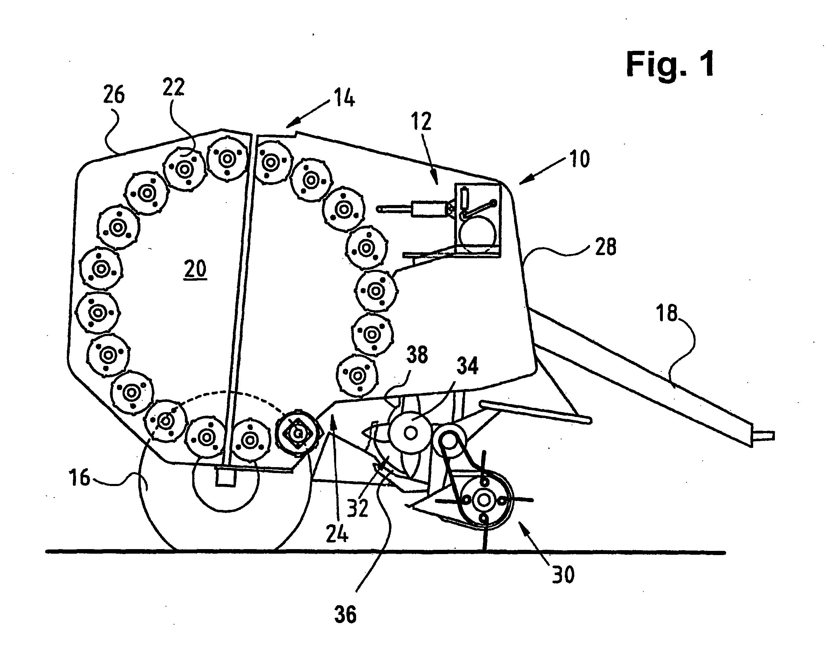

Eine in Figur 1 gezeigte landwirtschaftliche Maschine 10 ist als eine Rundballenpresse ausgebildet, was jedoch nur beispielhaft gemeint ist. Vielmehr könnte stattdessen auch ein Ladewagen, eine andere Pressenart, Schneidvorrichtungen eines Mähdreschers, z.B. ein Strohhäcksler, oder dergleichen Maschinen stehen, in denen Gut zerkleinert wird.

Die dargestellte ihrem Typ nach bekannte Maschine 10 enthält eine Bindevorrichtung 12, einen Rahmen 14, Räder 16, eine Deichsel 18, eine Ballenpreßkammer 20, Rollen 22, einen Ernteguteinlaß 24, einen schwenkbaren Gehäuseteil 26, einen festen Gehäuseteil 28, einen Aufnehmer 30 und eine Trennvorrichtung 32, die allesamt an sich bekannt sind und einer näheren Beschreibung nicht bedürfen.

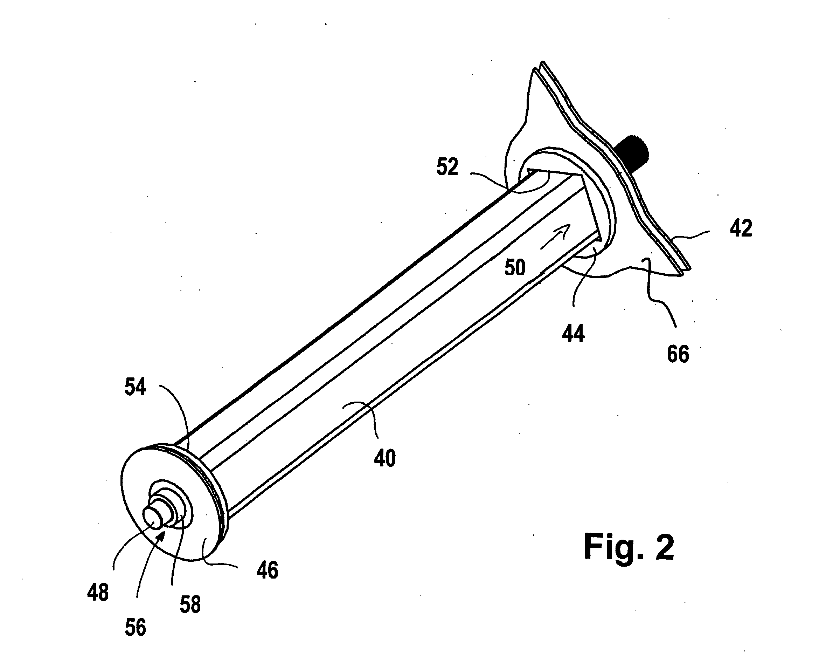

Die Trennvorrichtung 32 weist einen Rotor 34, Messer 36 und Abstreifer 38 auf, wie dies ebenfalls an sich bekannt ist. Da sich die Erfindung auf den Rotor 34 bezieht, wird im weiteren auf die Figuren 2 bis 4 verwiesen.

In Figur 2 sind Teile des Rotors 34 zu erkennen, nämlich ein Rohr 40, Mitnehmer 42, ein Distanzstück 44, eine Halteplatte 46 und eine Welle 48.

Das Rohr 40 ist in diesem Ausführungsbeispiel mit einem quadratischen Außenquerschnitt mit abgerundeten Kanten ausgebildet. Dies ist nicht zwingend; vielmehr könnte der Außenquerschnitt auch 3-, 4-, 5-, 6-, 7-, 8- oder noch höher eckig, oval oder kreuzförmig sein. Die abgerundeten Kanten sind für eine klemmfreie Montage hilfreich. Das Rohr 40 ist beim Einbau der Trennvorrichtung 32 in einer Rundballenpresse ungefähr so lang wie die Ballenpreßkammer 20 breit ist. Das Rohr 40 ist aus einem relativ dickwandigen Stahl gebildet und gezogen oder geschweißt.

Die Mitnehmer 42 sind in dem vorliegenden Ausführungsbeispiel im wesentlichen als ein dreieckiges gleichförmiges Polygon ausgebildet, das einstückig als Ring aus einer Platte gestanzt, geschnitten oder sonstwie herausgetrennt ist. Sich aus den Ecken des Polygons ergebende Mitnehmerelemente 66 sind relativ spitz, nämlich spitzwinklig, sodaß die Füße der beteiligten Schenkel nicht direkt ineinander übergehen. Vielmehr verläuft zwischen ihnen ein bogenförmiger Bereich. Im Zentrum des Mitnehmers 42 ist eine viereckige Ausnehmung 50 vorgesehen, die vier Anlageflächen 52 aufweist und mit möglichst wenig Spiel zu den Außenumfangsflächen des Rohrs 40 ausgebildet ist. Es sollte jedoch soviel Spiel vorhanden sein, daß die Mitnehmer 42 ohne zu große Anstrengung auf das Rohr 40 aufgeschoben werden können. Die Darstellung der Figur 2 zeigt die Ausnehmung 50 und die Anlageflächen 52 des Mitnehmers 42 durch Bezugnahme auf die eines Distanzstücks 44, da diese deckungsgleich sind.

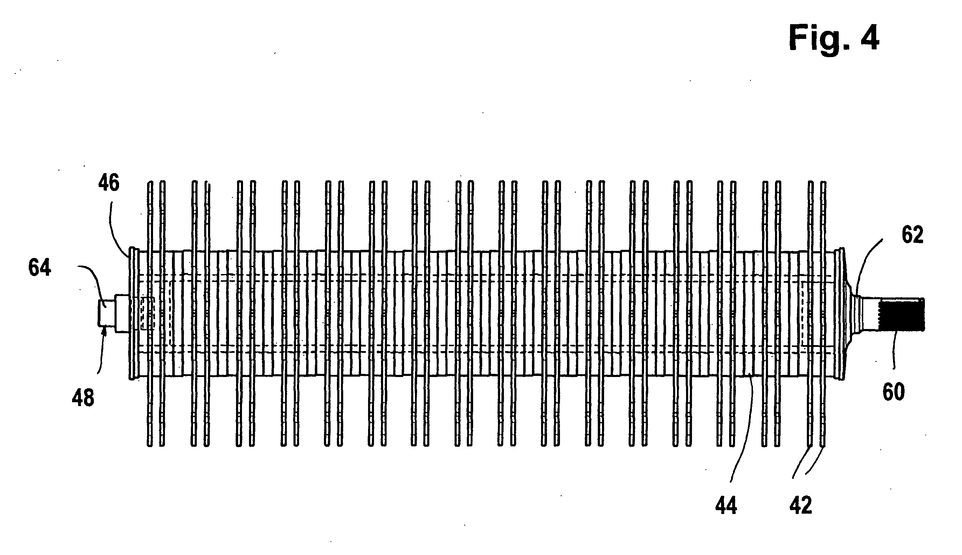

Jedes Distanzstück 44 ist ebenfalls als ein Ring ausgebildet, dessen Außenumfangsfläche rund-zylindrisch ist und der im Zentrum ebenfalls eine Ausnehmung 50 und Anlageflächen 42 gleicher Art und Größe aufweisen wie die Mitnehmer 42. Der Durchmesser der Distanzstücke 44 ist in dem bevorzugten Ausführungsbeispiel so gewählt, daß noch ein Abstand zu der radial am weitesten innenliegenden Umfangsfläche der Mitnehmer besteht. Wie sich aus Figur 4 ergibt, sind die Distanzstücke 44 etwas dicker ausgebildet als die Mitnehmer 42. Die Distanzstücke 44 können aus Metall (Stahl, Aluminium) aber auch aus Kunststoff hergestellt sein.

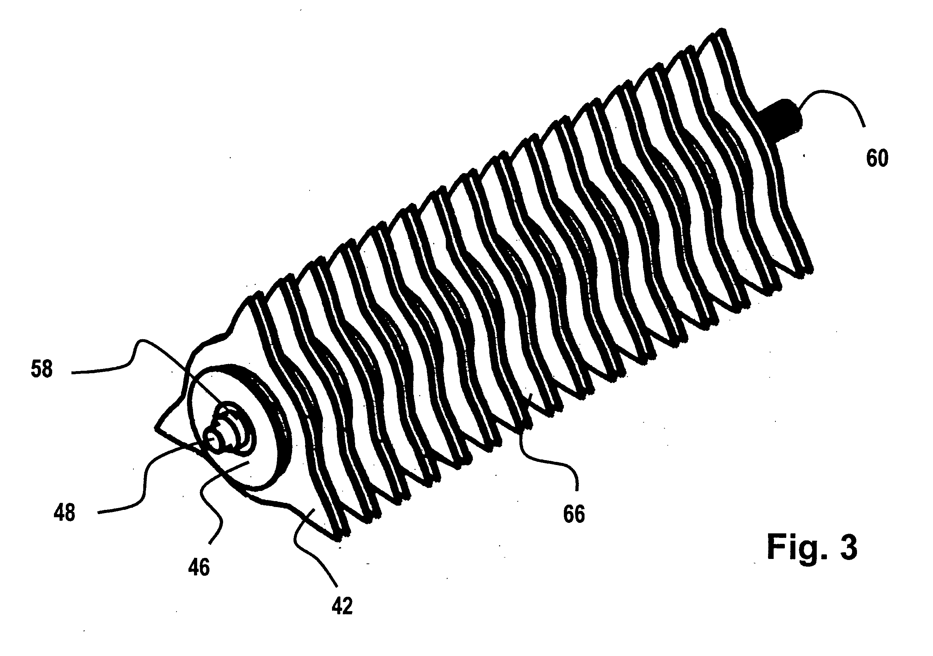

Wie aus den Figuren 3 und 4 zu ersehen ist, ist auf die Länge des Rohrs 40 verteilt eine Vielzahl von Distanzstücken 44 und Mitnehmern 42 vorgesehen. Gemäß Figur 4 befinden sich zwischen zwei Gruppen von Mitnehmern 42 jeweils drei Distanzstücke 44, während sich zwischen den Mitnehmern 42 einer Gruppe jeweils nur ein Distanzsstück 44 befindet. Zudem befindet sich endseitig jeweils noch ein Distanzstück 44. Alternativ könnten auch Distanzstücke 44 unterschiedlicher Breite vorgesehen werden.

Die Halteplatten 46 sind rundzylindrisch ausgebildet und weisen nicht sichtbare Schultern oder Nuten auf, mit deren Hilfe sie auf dem Ende des Rohrs 40 zentriert werden. Die Halteplatten 46 weisen Anlageflächen 54 auf, die im montierten Zustand auf den äußeren Mitnehmer 42 oder das äußere Distanzstück 44 drücken. Die Halteplatten 46 weisen je eine zentrische Nabe 56 auf, durch die sich die Welle 48 erstreckt. Der Außendurchmesser der Halteplatten 46 entspricht im wesentlichen dem eines Distanzstücks 44.

Die Welle 48 ist länger ausgebildet als das Rohr 40 und ragt auf beiden Seiten über dieses hinaus. Auf den in den Figuren rechten Seiten ist die Welle 48 mit einem Vielzahnprofil 60 für die Aufnahme einer Antriebsscheibe oder Antriebswelle und mit einer Schulter 62 versehen. Die Schulter 62 ist so bemessen, daß sie sich an die Außenseite der rechten Halteplatte 46 anlegen kann. Auf der in der Zeichnung linken Seite endet die Welle 48 mit einem Lagersitz 64, an den sich nach innen eine nicht gezeigte Aufnahme für die Spannmutter 58 anschließt, mit der die linke Halteplatte 46 an das Rohr 40 bzw. das letzte Distanzstück 44 oder den letzten Mitnehmer 42 angepresst wird. In einem nicht gezeigten alternativen Ausführungsbeispiel werden anstatt der Welle 48 zwei Wellenstummel versehen, die an den Halteplatten 46 befestigt sind,' wobei die Halteplatten 46 über Spannschrauben oder dergleichen zusammengezogen werden. Darüber hinaus sind weitere Bauweisen denkbar - z. B. können die Halteplatten 46 auf das Rohr 40 aufgeschraubt werden. Es wäre auch möglich, eine oder beide Halteplatten 46 anzuschweißen.

Nach alledem wird der Rotor 34 derart komplettiert, daß auf das Rohr 40 in einer bestimmten Reihenfolge Mitnehmer 42 und Distanzstücke 44 aufgeschoben werden, daß die Halteplatten 46 an den Stirnseiten des Rohrs 40 angelegt werden und die Welle 48 durch die Naben 56 geschoben und mit der Spannmutter 58 bzw. durch die Anlage der Schulter 62 an der rechten Halteplatte 46 gesichert wird. Je nach der Lage der Ausnehmung 50 gegenüber den Eckbereichen der Mitnehmer 42 ergibt sich ein gerader, versetzter oder schraubenlinienförmiger Verlauf der Mitnehmerelemente 66 der Mitnehmer 42.

In einer nicht gezeigten alternativen Ausführungsform wird die Unrundheit des Rohrs 40 dadurch hergestellt, daß auf ein rundes Rohr axial verlaufende Stege, Leisten oder dergleichen aufgeschraubt, aufgeschweißt oder aufgenietet werden.

## Patentansprüche

1. Rotor (34) mit Mitnehmern (42) als Teil einer Trennvorrichtung (32) einer landwirtschaftlichen Maschine (10), **dadurch gekennzeichnet, daß** der Rotor (34) ein Rohr (40) mit einem unrunden Außenquerschnitt enthält und die Mitnehmer (42) wenigstens eine Anlagefläche (52) aufweisen, die dem Außenquerschnitt des Rohrs (40) ganz oder teilweise folgt.

2. Rotor nach Anspruch 1, **dadurch gekennzeichnet, daß** vorzugsweise alle Mitnehmer (42) in der Form eines einteiligen Rings zusammengefasst sind.

3. Rotor nach Anspruch 1 oder 2, **dadurch gekennzeichnet, daß** die gegebenenfalls zusammengesetzten Mitnehmer (42) aus den Ecken eines Polygons gebildete Mitnehmerelemente (66) aufweisen.

4. Rotor nach einem oder mehreren der vorherigen Ansprüche, **dadurch gekennzeichnet, daß** die Anlageflächen (52) aufeinanderfolgender Mitnehmer (42) gegenüber den Mitnehmerelementen (66) unterschiedlich versetzt sind.

5. Rotor nach einem oder mehreren der vorherigen Ansprüche, **dadurch gekennzeichnet, daß** die gegebenenfalls zusammengesetzten Mitnehmer (42) mehr Anlageflächen (52) aufweisen als die Umfangsfläche des Rohrs (40) oder umgekehrt.

6. Rotor nach einem oder mehreren der vorherigen Ansprüche, **gekennzeichnet durch** Distanzstücke (44) zwischen den Mitnehmern (42).

7. Rotor nach einem oder mehreren der vorherigen Ansprüche, **dadurch gekennzeichnet, daß** die Distanzstücke (44) als Ring ausgebildet sind und einen runden Außenquerschnitt aufweisen.

8. Rotor nach einem oder mehreren der vorherigen Ansprüche, **gekennzeichnet durch** Gruppen von axial aufeinander folgenden Mitnehmern (42), wobei innerhalb der Gruppen jeweils weniger Distanzstücke (44) vorgesehen sind als zwischen den Gruppen.

9. Rotor nach einem oder mehreren der vorherigen Ansprüche, **dadurch gekennzeichnet, daß** an wenigstens einem Endbereich des Rohrs (40) eine mittels Schraubverbindung anlegbare Halteplatte (46) vorgesehen ist.

10. Rotor nach einem oder mehreren der vorherigen Ansprüche, **dadurch gekennzeichnet, daß** wenigstens eine der Halteplatten (46) mit einem Wellenstummel zur Lagerung des Rotors (34) versehen ist.

11. Rotor nach einem oder mehreren der vorherigen Ansprüche 1 bis (10), **dadurch gekennzeichnet, daß** zwei Halteplatten (46) vorgesehen sind, durch die und durch das Rohr (40) sich eine Welle (48) erstreckt, die axial an die Halteplatten (46) anlegbar ist.
